# EUROPÄISCHE PATENTSCHRIFT

(11) **EP 0 330 814 B1**
(45) Veröffentlichungstag und Bekanntmachung des Hinweises auf die Patenterteilung: **05.05.1993**
(21) Anmeldenummer: 89100373.3
(22) Anmeldetag: 11.01.1989
(51) Int. Cl.: B64C 1/14

(54) **Verriegelung für eine Flugzeugtür**
Locking system for an aircraft door
Dispositif de verrouillage pour porte d'avion

(30) Priorität: 04.03.1988 DE 3807067
(43) Veröffentlichungstag der Anmeldung: 06.09.1989
(73) Patentinhaber: Deutsche Aerospace Airbus Gesellschaft mit beschränkter Haftung, 21129 Hamburg (DE)
(72) Erfinder: Kallies, Günter, D-2000 Hamburg 54 (DE); Lessat-Kaupat, Wolfgang, D-2104 Hamburg 92 (DE)

(56) Entgegenhaltungen:
- EP-A- 0 188 825
- US-A- 4 125 235

## Beschreibung

Die Erfindung bezieht sich auf eine Flugzeugtür nach dem Oberbegriff des Anspruchs 1; eine solche Flugzeugtür ist z.B. aus der EP-A-0 188 825 bekannt.

Flugzeugtüren unterliegen strengen Sicherheitsvorschriften, um Unfälle durch nicht verriegelte Flugzeugtüren zu vermeiden. So verlangen die neuesten Empfehlungen und Richlinien für die Konstruktion innendruckbeaufschlagter Flugzeugtüren, daß entsprechende Vorkehrungen zur Überprüfung der vollständigen und sicheren Verriegelung vorgesehen sind. Eine denkbare Vorkehrung dieser Art kann beispielsweise darin bestehen, daß eine Entlüftungsklappe angeordnet ist, wodurch bei nicht vollständig verriegelter Tür der Aufbau des Innendruckes verhindert wird, so daß die schadhafte Verriegelung durch den nicht erfolgenden Druckaufbau bemerkt werden kann. Eine derartige Lösung, wobei die Kontrolle der Türverriegelung auf dem Wege über eine Kontrolle des Kabinendruckes erfolgt, wäre mit einem erheblichen Aufwand an zusätzlichen Einbauten verbunden, was aus Gewichts-und Kostengründen ungünstig wäre. Außerdem würde bei einer derartigen Kontrolle der Verriegelung zwischen dem Verriegeln und dem Anzeigen einer schadhaften Verriegelung eine bestimmte Zeitspanne vergehen, so daß entsprechende Abhilfe-Maßnahmen erst mit einer Verzögerung eingeleitet werden können.

Demgemäß liegt der Erfindung die Aufgabe zugrunde, eine gattungsgemäße Flugzeugtür mit einer derartigen Verriegelung auszubilden, daß diese letzte sehr einfach herzustellen ist und bezüglich Gewicht und Kosten Vorteile gegenüber anderen Lösungen aufweist, wobei eine unvollständige Verriegelung der Tür bei deren Schließen sofort erkannt wird.

Diese Aufgabe wird bei einer gattungsgemäßen Flugzeugtür durch die kennzeichnenden Merkmale des Patentanspruchs 1 gelöst. Danach ist vorgesehen, daß der Bedienhebel, womit die letzte Bedienungsmaßnahme durchgeführt wird, mit der Verriegelung derart zusammenwirkt, daß der Zustand der Verriegelung, insbesondere mittels des Bedienhebels für die Notrutsche, überprüfbar ist. Eine vorteilhafte Weiterbildung der Erfindung ist im Unteranspruch angegeben.

Die Erfindung ist anhand der Zeichnung dargestellt und in der Beispielbeschreibung näher erläutert. Es zeigen
- Fig. 1: eine Übersichtsdarstellung einer Verriegelung für eine Flugzeugtür,
- Fig. 2: die Verriegelung nach Fig. 1 in Öffnungsstellung,
- Fig. 3: die Ansicht III nach Fig. 1 und
- Fig. 4: die Ansicht IV nach Fig. 3.

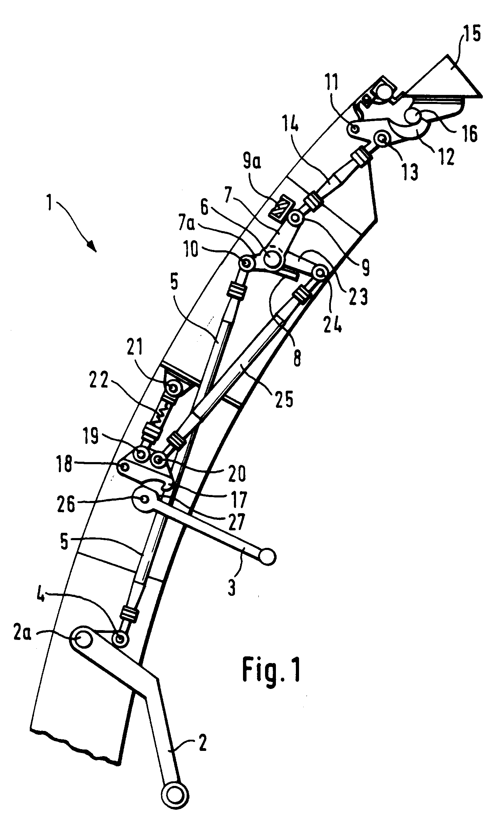

Figur 1 zeigt eine Seitenansicht einer Verriegelungsanordnung für eine Flugzeugtür 1 mit einem Innenhebel 2, einem Notrutschenbedienhebel 3, wobei der Innenhebel 2, der um einen türfesten Punkt 2a schwenkbar ist, einen Gelenkpunkt 4 aufweist, in dem eine Verbindungsstange 5 angelenkt ist. Mit einer türfest gelagerten Verriegelungswelle 6 sind ein Hebel 7 mit einem Gelenkpunkt 9 und ein Hebel 7a mit einem Gelenkpunkt 10 schwenkbar gelagert. Beide Hebel 7 und 7a schließen, wie gezeigt, einen Winkel ein und sind starr mit der Welle 6 verbunden, wobei ein Mitnahmehebel 8 in gleicher Weise mit der Welle 6 verbunden ist. Die aus dem Hebel 7 und der Stange 14 bestehende Anordnung ist bei der gezeigten Beispielausführung im Prinzip zweifach vorgesehen, wie noch gezeigt wird. Aufgrund der zweidimensionalen Darstellungen wird dies der Einfachheit halber hier jedoch nicht berücksichtigt. Im Gelenkpunkt 10 des Hebels 7a greift die Stange 5 an. Um einen anderen türfesten Punkt 11 ist ein Verriegelungshaken 12 schwenkbar gelagert, der einen Anschlußpunkt 13 aufweist. Die Punkte 9 und 13 sind durch eine Verriegelungsstange 14 gelenkig miteinander verbunden. Seitens der Rumpfstruktur sind zwei Halterungen 15 mit je einem Ösenbeschlag 16 angeordnet, in die die Haken 12 eingreifen können. Ein Blockierhaken 17 ist um einen türfesten Punkt 16 schwenkbar angeordnet und weist zwei Gelenkpunkte 19 und 20 auf. Die Tür 1 weist weiterhin einen Punkt 21 auf, in dem eine stangenförmige Druckfeder 22 mit ihrem einen Ende angreift. Das andere Ende der Feder 22 ist im Punkt 19 am Haken 17 angelenkt, so daß dem Haken 17 ein rechtsdrehendes Moment um den Punkt 18 erteilt wird. Um die Achse 6 ist ein Hebel 23 mit einem Gelenkpunkt 24 schwenkbar angeordnet, in dem das erste Ende einer Stange 25 angreift, deren zweites Ende mit dem hakenseitigen Punkt 20 gelenkig verbunden ist. Der Bedienhebel 3 für eine Notrutsche bekannter Art ist um einen Punkt 26 schwenkbar und weist eine Eingriffsfläche 27 auf.

In geöffnetem Zustand befindet sich die Flugzeugtür 1 außerhalb der Rumpfstruktur. Zum Schließen wird diese Tür 1 von außen in die Rumpfstruktur eingeschwenkt, wobei sich der Haken 12 in seiner unteren Position befindet, so daß er die Öse 16 passieren kann. Nach dem Einschwenken wird die Tür 1 durch Abwärtsschwenken des Innenhebels 2 um den türfesten Punkt 2a in die formschlüssige Position abgesenkt. Dabei wird der Hebel 7 über die Stange 5 und die Welle 6 entgegen dem Uhrzeigersinne gedreht, wodurch der Haken 12 nach oben ausschwenkt, bis er in die Öse 16 eingreift. Der Hebel 7 und die Stange 14 bilden eine zwischen der Verriegelungswelle 6 und dem Anschlußpunkt 13 angeordnete Kniehebelanordnung. Beim Abwärtsschwenken des Innenhebels 2 durchwandert der Kniegelenkpunkt 9 bei seiner Linksdrehung die Verbindungslinie der Punkte 6 und 13 und kommt, wie gezeigt, um eine definierte Strecke links von der Linie infolge eines Anschlages 9a zur Ruhe. In dieser eingerasteten Lage der Kniehebelanordnungen befindet sich der Innenhebel 2 in der gezeigten Position und die Tür 1 ist über den Haken 12 infolge des Kniehebeleffektes mit der Rumpfstruktur automatisch, d.h. ohne Ausführung einer besonderen Bedienungsmaßnahme ordnungsgemäß verriegelt. Bei der Linksdrehung des Hebels 7 wird außer den Gelenkpunkten 9 auch der starr damit verbundene Mitnahmehebel 8 gedreht. In der Endphase dieser Drehung wird auch der lose auf der Verriegelungswelle 6 sitzende Hebel 23 mitgenommen. Dies wird dadurch erreicht, daß der Mitnahmehebel 8 nahe dem Hebel 23 angeordnet und derart ausgebildet ist, daß er sich bei seiner Linksdrehung an den Hebel 23 anlegt und diesen mitnimmt. Hierdurch wird der Blockierhaken 17 mittels der Stange 25 entgegen dem Uhrzeigersinne um den Punkt 18 geschwenkt.

Aufgrund der Gestaltung des Mitnahmehebels 8 und des Hebels 23 ist sichergestellt, daß der Blockierhaken 17 bei ordnungsgemäßer Verriegelung, d.h. bei eingrasteter Kniehebelanordnung 7 und 14 in die gezeigte Position gebracht wird. Entsprechend der festgelegten Vorgehensweise beim Start eines Flugzeuges ist nach dem Schließen und Verriegeln der Tür 1 die Notrutsche betriebsklar zu machen, damit diese bei Bedarf in Funktion gesetzt werden kann. Hierzu ist der Notrutschenbedienhebel 3 aus der gezeigten Stellung im Uhrzeigersinn nach unten zu schwenken. Erfindungsgemäß wird dabei der Zustand der Verriegelung überprüft. Dabei ergibt sich folgender Ablauf. Beim ordnungsgemäßen Verriegeln der Tür 1 wird der Hebel 7 entgegen dem Uhrzeigersinn gedreht, bis das Kniegelenk 9 den Anschlag 9a berührt und sich damit in der verriegelten Position befindet. Dabei wird zugleich der lose sitzende Hebel 23 durch den Mitnahmehebel 8 angehoben, so daß der Blockierhaken 17 mittels der Stange 25 in die gezeigte Position gebracht wird. In dieser für eine ordnungsgemäße Verriegelung charakteristischen Position des Blockierhakens 17 kann nun der Hebel 3 ohne weiteres nach unten geschwenkt werden und die Tür ist in abflugbereitem Zustand. Im Gegensatz dazu zeigt sich eine schadhafte Verriegelung dadurch, daß das Kniegelenk 9 nicht am Anschlag 9a anliegt und der Mitnahmehebel 8 demzufolge nicht über den Hebel 23 und die Stange 25 auf den Haken 17 einwirkt, um diesen anzuheben. Daher verbleibt der Blockierhaken 17 unter der Wirkung der Feder 22 in seiner unteren für eine nicht ordnungsgemäße Verriegelung der Tür 1 charakteristischen Position. Bei dem Versuch, die Tür 1 durch Betätigen des Hebels 3 in einen abflugbereiten Zustand zu bringen, greift der Blockierhaken 17 demgemäß in die Eingriffsfläche 27 ein. Hierdurch wird eine Schwenkung des Hebels 3 in die Abflugposition so lange verhindert, bis die Verriegelung geklärt ist.

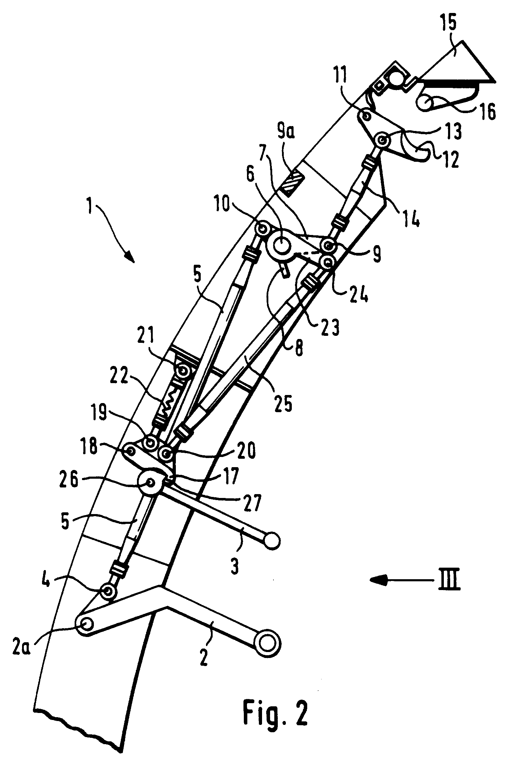

Figur 2 zeigt die Anordnung nach Fig. 1 mit den vorbeschriebenen Elementen, wobei die beiden Hebel 2 und 3 bereits in Öffnungsposition gebracht sind, etwa um die Tür 1 nach einer Landung zu öffnen. Hierzu wurde zunächst der Innenhebel 2 entgegen dem Uhrzeigersinn geschwenkt, wobei dem Hebel 7 über die Stange 5 und die Welle 6 eine Rechtsdrehung erteilt wurde, so daß der Verriegelungshaken 12 jetzt die gezeigte entriegelte Stellung einnimmt. Bei dieser Betätigung des Innenhebels 2 hebt der Mitnahmehebel 8 vom Hebel 23 ab, so daß der Blockierhaken 17 infolge der Druckfeder 22 in seine gezeigte untere Position gelangt. Beim Aufwärtsschwenken des Notrutschenbedienhebels 3 rastet der Blockierhaken 17 hinter der Eingriffsfläche 27 ein, so daß der Hebel 2 erst wieder in seine abflugbereite Stellung gebracht werden kann, wenn die Tür 1 für den nächsten Flug verriegelt worden ist.

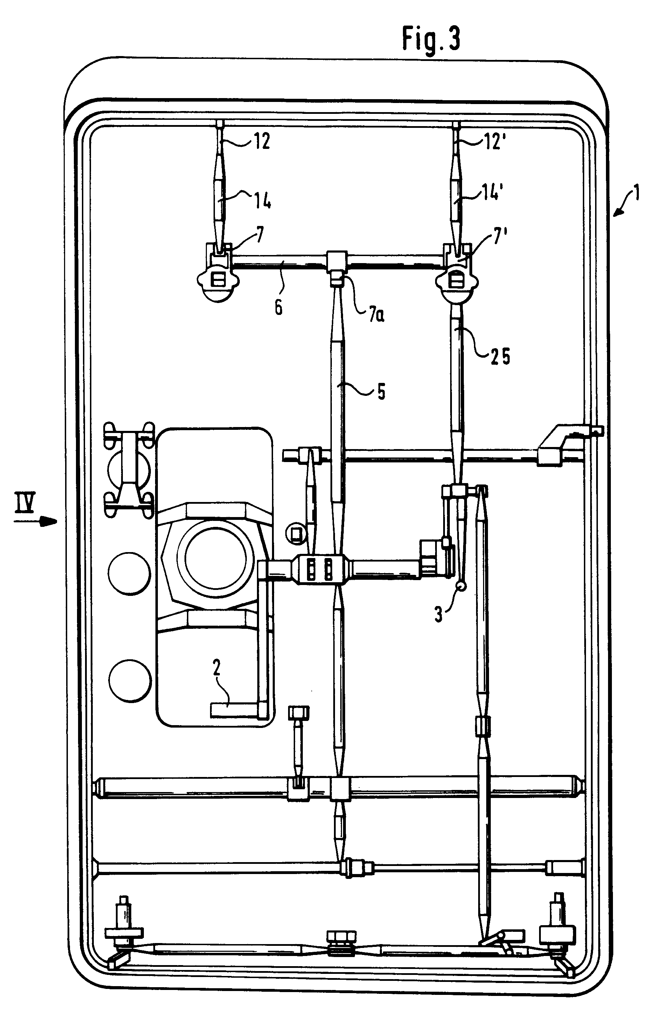

Figur 3 zeigt die Ansicht III der Tür 1 nach Fig. 1, wobei die Innenverkleidung und der Traglenker entfernt sind, so daß die vorgenannten Elemente, wie der Innenhebel 2, der Notrutschenbedienhebel 3 die Stange 5, die Verriegelungswelle 6 und die Stange 25 sichtbar sind. Die Welle 6 ist an ihren Enden gelagert und weist in ihrer Mitte den Hebel 7a auf. Nahe den Enden der Welle 6 sind die Hebel 7 und 7′ angeordnet, die über die Stangen 14 und 14′ mit den Verriegelungshaken 12 und 12′ in Wirkverbindung stehen.

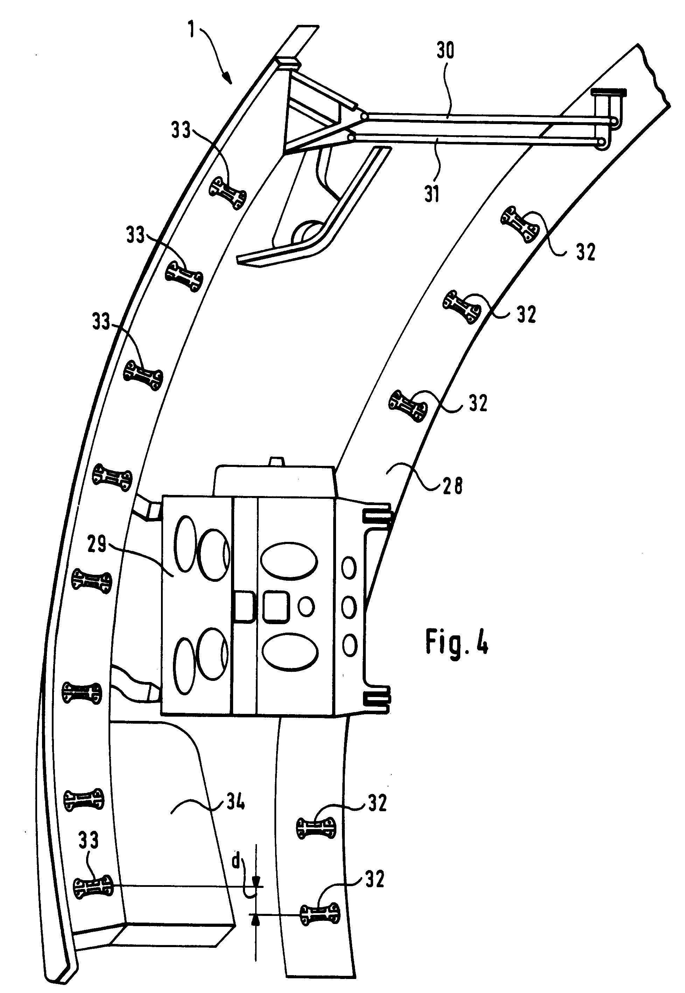

Figur 4 zeigt die Ansicht IV der Tür 1 in geöffnetem Zustand. Dabei ist die Tür 1 aus der Rumpfstruktur 28 anhand eines Traglenkers 29 herausgeschwenkt und befindet sich außerhalb des Rumpfes neben der Türöffnung. Zur Stabilisierung der Schwenkbewegung sind zwei Führungslenker 30 und 31 vorgesehen. Das Bild zeigt weiterhin rumpfseitige Anlagebeschläge 32 und türseitige Anlagebeschläge 33 sowie den Notrutschenbehälter 34. In nicht geschlossenem Zustand ist die Tür 1 gegenüber ihrer Position in geschlossenem Zustand um das Maß d angehoben. Zum Schließen der Tür 1 wird diese zunächst in die Rumpfstruktur 28 eingeschwenkt und dann um das genannte Maß d abgesenkt. Hierdurch gelangen die türseitigen Anlagebeschläge 33 jeweils in Positionen, in denen jedem Beschlag 33 in radialer Richtung nach außen ein rumpfseitiger Anlagebeschlag 32 gegenüberliegt. Bei Auftreten eines gegenüber der Umgebung wirkenden Kabinendruckes wird die infolge der Druckdifferenz auf die Tür 1 wirkende Last über die Beschläge 32 und 33 formschlüssig auf die Rumpfstruktur 28 übertragen. Der Notrutschenbehälter 34 enthält die für eine schnelle Evakuierung des Flugzeuges erforderliche Notrutsche und ist im Regelfall mit dem unteren Bereich der Tür 1 verriegelt. Das Bild zeigt die Notrutsche in diesem Zustand bei geöffneter Tür 1. Diese Konfiguration liegt immer dann vor, wenn die Tür 1 nach einer normalen Landung ohne Betätigung des Hebels 3 geöffnet worden ist. Sollte es erforderlich sein, daß das Flugzeug von den Passagieren rasch zu räumen ist, so wird die Notrutsche vor dem Öffnen der Tür mittels des Hebels 3 in den betriebsbereiten Zustand gebracht. In bekannter Weise wird dabei die türseitige Halterung der Notrutsche gelöst und eine entsprechende rumpfseitige Halterung verriegelt, so daß die Notrutsche in diesem Falle mit dem betreffenden Türschweller für den weiteren Funktionsablauf verbunden bleibt.

Die Erfindung erstreckt sich auch auf Flugzeugtüren, deren konstruktive Gestaltung von der gezeigten Beispielausführung abweicht, sofern sie nur ein Bedienungselement für eine Notrutsche aufweisen. So ist die Erfindung auch auf Türen anwendbar, wobei die Türlast anstatt über Anlagebeschläge 32 und 33 über entsprechend dimensionierte Ränder der Tür auf die Rumpfstruktur übertragen wird. Anstelle des Blockierhakens 17 sind auch andere gleichwertige Blockierelemente denkbar, wie beispielsweise ein in bezug auf die Achse 26 axial oder radial verschiebbarer Stift, der in eine entsprechende achsenfeste Bohrung einschiebbar ist. Gleiches gilt für die Feder 22, die prinzipiell durch eine Zugfeder oder eine Schenkelfeder ersetzbar ist. Die Erfindung ist somit nicht auf die dargestellte und beschriebene Beispielausführung beschränkt. Sie erstreckt sich vielmehr auf alle Ausgestaltungen, die im Rahmen der Ansprüche denkbar sind.

## Patentansprüche

1. Flugzeugtür in der Art einer Einschubtür zum Schließen einer Einstiegs-/Ausstiegsöffnung in einem Flugzeugrumpf, die durch im wesentlichen vertikale bugseitige und heckseitige Strukturelemente des Flugzeugrumpfes begrenzt wird und die Flugzeugtür zwischen einer geschlossenen und einer geöffneten Position schwenkbar ausgebildet ist, wozu Traglenker vorgesehen sind, wodurch die Flugzeugtür während des Aus- und Einschwenkens im wesentlichen parallel zu ihrer Ausgangslage geführt wird, und die Flugzeugtür in ihrer geschlossenen Position durch Absenken in eine formschlüssige Position gegenüber der Rumpfstruktur eingeschoben und durch eine Verriegelung mittels einer Kniehebelanordnung in dieser Position verriegelt wird und die Tür einen Notrutschenbehälter mit einer Notrutsche sowie einen Bedienhebel für die Notrutsche aufweist und zur manuellen Durchführung des Einschiebevorganges ein Innenhebel angeordnet ist, wobei die Tür durch eine Folge von mindestens zwei Bedienungsmaßnahmen in abflugbereiten Zustand zu bringen ist,
dadurch **gekennzeichnet,**
daß die Kniehebelanordnung aus einem Hebel (7) und einer Verriegelungsstange (14) besteht, die in einem Gelenkpunkt (9) miteinander verbunden sind, wobei die Verriegelungsstange (14) in einem Punkt (13) an einem Verriegelungshaken (12) angelenkt und der Hebel (7) um eine Verriegelungswelle (6) schwenkbar ist und der Notrutschenbedienhebel (3) eine Eingriffsfläche (27) für einen Blockierhaken (17) aufweist und der Innenhebel (2) beim Schließen der Tür (1) über eine Stange (5) derart auf die Verriegelungswelle (6) einwirkt, daß die Kniehebelanordnung in die verriegelte Position einrastet, indem sich der Gelenkpunkt (9) nach Durchwandern der Verbindungslinie des Gelenkpunktes (13) mit der Verriegelungswelle (6) an einen Anschlag (9a) anlegt und ein fest mit der Verriegelungswelle (6) verbundener Mitnahmehebel (8) vorgesehen ist, der über einen lose auf der Verriegelungswelle (6) sitzenden Hebel (23) und eine Stange (25) auf den Blockierhaken (17) so einwirkt, daß der Notrutschenbedienhebel (3) durch den Blockierhaken (17) nur dann freigegeben wird, wenn die Kniehebelanordnung ordnungsgemäß eingerastet ist.

2. Flugzeugtür nach Anspruch 1,
dadurch **gekennzeichnet,** daß die aus einem Hebel (7) und einer Verriegelungsstange (14) bestehende Kniehebelanordnung in zweifacher Ausbildung vorgesehen ist.

## Claims

1. Aircraft door of the push-in type for sealing an entry/exit opening in an aircraft fuselage, which is defined by substantially vertical structural elements of an aircraft fuselage at the forward and rearward side, and with the aircraft door arranged to be pivotable between a closed and an open position, for which purpose support guides are provided by means of which the aircraft door is held substantially parallel to its initial position whilst being pivoted in and out, and the aircraft door is in its closed position pushed into a positively connected position relative to the fuselage structure by way of lowering, and secured in this position by bolting by means of a knee-lever arrangement, and the door comprises an emergency-chute container to accommodate an emergency chute and an operating lever for the emergency chute, and an inside lever for manually carrying out the push-in movement, whereby the door is placed into a ready-for-take-off position by a succession of at least two operations,
**characterised in that** the knee-lever arrangement comprises a lever (7) and a locking bar (14) which are interconnected in a hinge point (9), and the locking bar (14) is hinged at one point (13) to a locking hook (12) and the lever (7) is pivotable around a locking shaft (6), and the emergency-chute operating lever (3) has an engagement surface (27) for a blocking hook (17), and whilst closing the door (1) the inside lever (2) acts via a bar (5) on the locking shaft (6) in such a manner that the knee-lever arrangement engages into a locked position in that the hinge point (9), after having passed through the connecting line of the hinge point (13), abuts with the locking shaft (6) against a stop (9a), and a pickup lever (8), which is fixed to the locking shaft (6), is provided which acts on a blocking hook lever (23) via a lever (23), which is loosely seated on the locking shaft (6), so that the emergency-chute lever (3) is released by the blocking hook (17) only if the knee-lever arrangement is properly engaged.

2. Aircraft door according to claim 1,
**characterised in that** the knee-lever arrangement comprising a lever (7) and a locking bar (14) is provided twofold.

## Revendications

1. Porte d'avion du genre porte encastrable pour fermer une ouverture d'entrée/sortie d'un fuselage d'avion, bordée par des éléments structurels verticaux avant et arrière du fuselage, ladite porte étant réalisée de manière à pouvoir pivoter entre une position fermée et une position ouverte, des bras-supports orientables étant prévus à cette fin, la porte d'avion étant ainsi guidée sensiblement parallèlement à sa position initiale pendant le pivotement de sortie et de rentrée, et la porte d'avion se trouvant, lorsqu'elle est fermée, dans une position d'engagement positif avec la structure du fuselage et étant verrouillée dans cette position par un dispositif de verrouillage au moyen d'un système de genouillère, ladite porte présentant une enceinte de glissière de secours, avec une glissière de secours, et un levier de commande pour commander cette glissière de secours, et un levier intérieur étant prévu pour l'exécution manuelle du rentrage, la porte étant mise en condition "prêt pour le vol" par une séquence d'au moins deux manipulations,
caractérisée
par le fait que le système de genouillère est constitué par un levier (7) et par une tringle de verrouillage (14) liés l'un à l'autre en un point d'articulation (9), la tringle de verrouillage (14) étant liée de manière articulée, en un point (13), à un crochet de verrouillage (12), ledit levier (7) pouvant pivoter autour d'un arbre de verrouillage (6), le levier de commande (3) de la glissière de secours présentant une surface d'engagement pour un crochet de blocage (17), et le levier intérieur (2) agissant, lors de la fermeture de la porte (1), sur l'arbre de verrouillage (6) par l'intermédiaire d'une tringle (5), d'une manière telle que le système de genouillère s'enclenche à la position verrouillée, le point d'articulation (9) s'appliquant contre une butée (9a) après avoir franchi la ligne reliant le point d'articulation (13) à l'arbre de verrouillage (6), et un levier d'entraînement (8) solidarisé à l'arbre de verrouillage (6) étant prévu qui, par l'intermédiaire d'un levier (23) monté libre sur l'arbre de verrouillage (6) et d'une tringle (25), agit sur le crochet de blocage (17) de manière que le levier (3) de commande de la glissière de secours ne soit libéré par le crochet de blocage (17) que si le système de genouillère est correctement enclenché.

2. Porte d'avion selon revendication 1, caractérisée par le fait que le système de genouillère, constitué par un levier (7) et par une tringle de verrouillage (14), est prévu en double.
